# EUROPEAN PATENT SPECIFICATION

(11) **EP 0 804 988 B1**
(45) Date of publication and mention of the grant of the patent: **30.10.2002**
(21) Application number: 97106588.3
(22) Date of filing: 21.04.1997
(51) Int. Cl.: B23D 47/02, B27B 5/06

(54) **Cutting machine and table extension**
Schneidmaschine und Anbautisch
Machine à couper et table accessoire

(30) Priority: 29.04.1996 IT BO960069 U; 10.12.1996 DE 29621421 U
(43) Date of publication of application: 05.11.1997
(73) Proprietor: BIESSE S.p.A., 61100 Pesaro (IT)
(72) Inventor: Naldi, Valter, 40100 Bologna (IT)
(74) Representative: Jorio, Paolo

(56) References cited:
- EP-A- 0 220 615
- EP-A- 0 455 095
- DE-A- 3 004 966
- DE-A- 4 002 047
- GB-A- 2 288 568
- US-A- 3 695 189
- US-A- 3 960 354
- US-A- 4 860 807
- US-A- 5 211 092
- H. SOIN : "Plattenaufteilanlagen" HOLZ ALS ROH- UND WERKSTOFF, vol. 44, no. 1, January 1986, BERLIN DE, pages 31-35, XP002024851

## Description

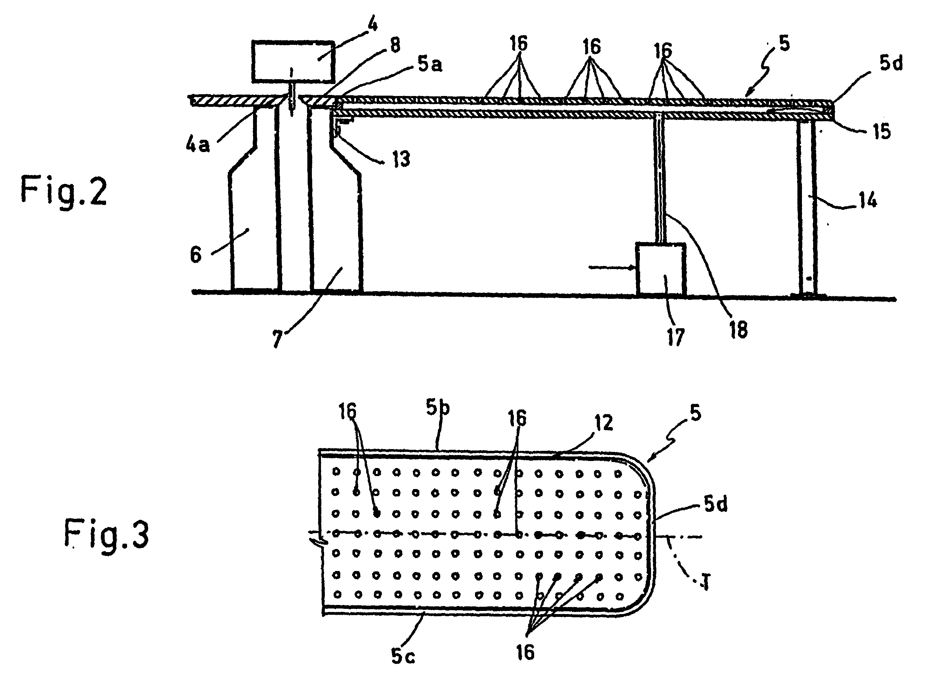

The present invention relates to a machine for cutting panels of wood or similar, and in particular to a cutting machine presenting a single cutting line for cutting panels longitudinally and transversely according to the precharacterizing portion of claim 1; see H.SOINÉ: "Plattenaufteil anlagen" HOLZ ALS ROH- UND WERKSTOFF, vol. 44, no. 1, January 1986, BERLIN DE, *paragraph 3.2.4, line 6-line 11* figure 3.

As is known, cutting machines of the aforementioned type comprise:
a worktable divided into two portions;
a cutting station along one edge of the worktable and presenting a single cutting line; and
a number of benches on the opposite side of the cutting station to the worktable, and some of which are located at the first portion and some at the second portion of the worktable.

The benches are parallel to one another, are separated by gaps enabling access by the operator for the operations described below, and are rectangular with sharp edges opposite the cutting station.

In actual use, a pack of panels is loaded on to a first portion of the worktable, is fed by push members and pliers towards the cutting station, and is cut, e.g. longitudinally, into a number of packs of strips, which, downstream from the cutting station, rest on the benches adjacent to the first portion of the worktable. Very often, the benches are roughly the same length as the packs of strips. At this point, the operator, working manually, rotates the packs of strips 180° and at the same time transfers them on to the benches adjacent to the second portion of the worktable. Once the packs are rotated and transferred, they are aligned and pushed towards the cutting station where they are cut transversely to form a number of packs of slabs on the second portion of the worktable.

The problems encountered on cutting machines of the above type all derive from the rectangular shape, and in particular the sharp edges, of the benches. That is, as they are rotated and transferred from the first to the second benches, the lower surfaces of the packs, also on account of their weight and length, invariably contact the sharp edges of the benches, thus resulting in scoring (scratching) of the underside of the bottom strips in the packs

In other words, since the benches are often shorter than the longitudinal strips, it is provided a downwards deflextion (due to the own weight of the panels) of the pack parts which cantileverly protrude; owing to this deflexion, during the rotation produced by the operator, the underside of the bottom strips drags on the sharp edges thus damaging these latter.

The consequence is a financial loss due to the damaged strips having to be rejected, and a waste of time of the operator which has to remove the damaged strip from each pack. In view of the high output of such machines, and the fact that very often the panels being cut are of valuable material or present finished faces, the economic loss involved is obviously considerable. Moreover, the operator is liable to accidentally contact the sharp edges when working in the confined space available between adjacent benches.

It is an object of the present invention to provide a cutting machine designed to overcome the aforementioned drawbacks.

According to the present invention, there is provided a machine for cutting packs of panels, and comprising:
a worktable;
a cutting station installed along an edge of said worktable and for cutting packs of panels both longitudinally and transversely along a single cutting line and by means of a circular saw; and
a number of benches located on the opposite side of said cutting station to said worktable, and each presenting a respective horizontal longitudinal axis perpendicular to said cutting line, and a first axial end portion adjacent to said cutting station;
each of said benches presents a contour defined by a first edge adjacent to said cutting station and therefore defining said first portion, by two substantially straight second edges opposite each other and parallel to said axis, and by a third edge opposite said first edge characterized in that said third edge presentes at least one curvilinear portion.

The bench, which is a further subject of the present invention and having the features of claim 10, may obviously be supplied separately from the rest of the cutting machine, in which case, the bench will be equipped with connecting means for fast assembly and disassembly to/from the body of the cutting machine.

A preferred, non-limiting embodiment of the present invention will be described by way of some examples with reference to the accompanying drawings, in which:
Figure 1 shows a schematic plan view of a cutting machine, wherein a first embodiment of the present invention is shown;
Figure 2 shows a larger-scale section, with parts removed for clarity, along line II-II in Figure 1;
Figure 3 shows a partial plan view of a further embodiment of a detail in Figure 1;
Figure 4 represents a second embodiment of the present invention;
Figure 5 represents a third embodiment of the present invention;
Figurs 6A, 6B show a fourth embodiment of the present invention.

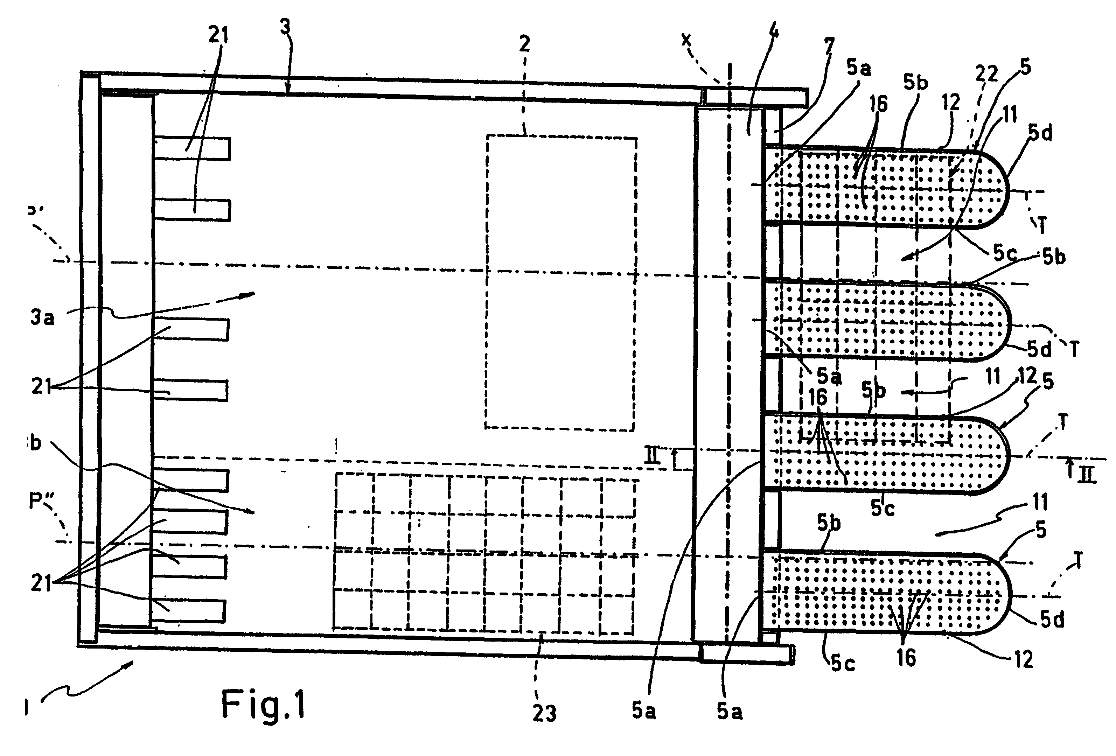

Number 1 in Figure 1 indicates a machine for cutting packs 2 of panels, and comprising:
a worktable 3 divided into two coplanar portions 3a and 3b;
a cutting station 4 installed along an edge of worktable 3, and for cutting packs 2 both longitudinally and transversely by means of a circular saw 4a; and
a number of benches located on the opposite side of cutting station 4 to worktable 3.

With reference to Figures 1 and 2, worktable 3 is substantially rectangular, and is supported on a base, of which Figure 2 shows a portion 6 adjacent to station 4. A portion 7 of the base, on the opposite side of a horizontal cutting line X defined in station 4, supports a plate 8, the upper face of which is coplanar with the upper face of worktable 3. As stated, worktable 3 is divided into two portions 3a and 3b, which present respective horizontal longitudinal axes P' and P" perpendicular to cutting line X, and of which portion 3a is wider than portion 3b.

Benches 5 each present a horizontal longitudinal axis T perpendicular to cutting line X, and an upper face coplanar with the upper face of worktable 3; benches 5 could be equally spaced to define gaps 11 enabling access by the operator for the operations described below; and each bench 5 is substantially rectangular, and more specifically presents a contour defined by a straight edge 5a parallel to the cutting line X and perpendicular to axis T, by two straight edges 5b and 5c opposite each other and parallel to axis T, and by an edge 5d opposite edge 5a and describing an arc of a circle with its center on axis T and a diameter equal to the distance between edges 5b and 5c. By way of example, Figure 1 shows four benches 5, of which two are located at portion 3a of worktable 3, one at portion 3b of worktable 3, and one partly at portion 3a and partly at portion 3b. The number and arrangement of benches 5 in relation to portions 3a and 3b of worktable 3 may of course differ from those shown in Figure 1, providing at least one bench 5 is located at each portion 3a, 3b of worktable 3.

As shown in Figure 3, a bevel 12 extends along the entire periphery of the upper face of bench 5 defined by edges 5b, 5c and 5d; bench 5 presents a first axial end portion corresponding to edge 5a and supported by brackets 13 on portion 7 of the base, and a second axial end portion opposite the first, corresponding to edge 5d, and presenting a supporting leg 14; bench 5 could present an inner channel 15 communicating with the upper face of bench 5 through a number of holes 16 formed in the upper face; and channel 15 is supplied with compressed air by a device 17 via a conduit 18.

In actual use, the pack 2 of panels is loaded on to portion 3a of worktable 3 and displaced by means of known pliers 21 towards station 4; first of all pack 2 is cut longitudinally into packs 22 of strips, which come to rest on benches 5 at portion 3a of worktable 3; the operator then manually rotates packs 22 90° and at the same time transfers them on to benches 5 at portion 3b of worktable 3; and, once aligned, packs 22 are pushed towards station 4 and cut transversely with reference to the first cutting step to form packs 23 of slabs on portion 3b of worktable 3.

Depending on the type of cutting machine, some of the above operations, apart from rotation and transfer of packs 22 from one bench 5 to another, may be performed using automatic or semiautomatic devices, e.g. pushers, pliers, aligning devices etc. As packs 22 are rotated and transferred from one bench 5 to another, compressed air could be fed through holes 16 in bench 5 to act as an air cushion for packs 22 over holes 16 and so assist the operator in handling the packs.

Due to the design described above of benches 5, packs 22, as they are rotated and transferred manually from one bench 5 to another, therefore encounter no sharp edges which might score the bottom strips in the packs; and the operator's job is made easier by the rounded shape of the second axial end of bench 5 and in case by the air cushion generated on each bench 5, both of which provide for more easily handling packs 22. As such, machine 1 as described herein prevents any damage to the strips, with all the economic and time-saving advantages this entails, and also ensures the safety of the operator by eliminating the sharp edges.

Clearly, changes may be made to cutting machine 1 as described and illustrated herein without, however, departing from the scope of the present invention as claimed.

For example, as shown in Figure 3, edge 5d may present a straight central portion perpendicular to axis T, and two circular end portions connecting edges 5b and 5c.

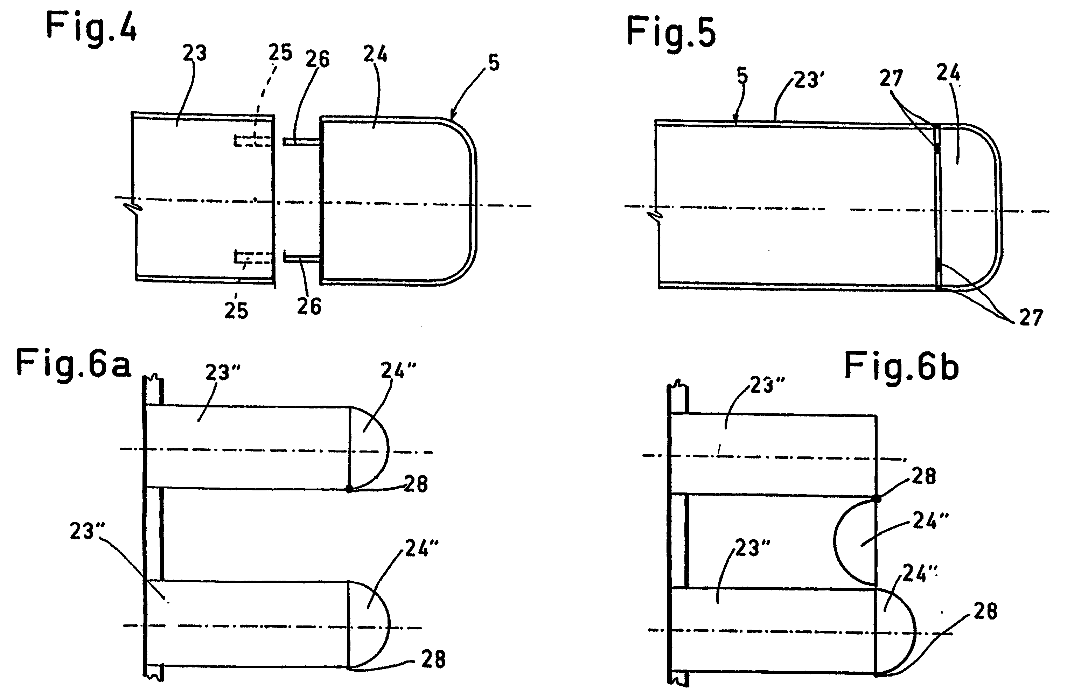

Figure 4 represents a second embodiment of the present invention. A bench 5 has been devided in two parts 23, 24 which bear seats 25 and pins 26 respectively. It is sufficient to insert pins 26 into the relevant seats 25 to obtain a support surface for the pack of panels. It is obvious for the man skilled in the art that this particular second embodiment of the present invention could be applied on existing benches having sharp edges in order to transform them into benches presenting curvilinear edges.

Furthermore, figure 5 shows a third embodiment of the present invention wherein parts 23', 24', which constitute bench 5, are linked to each other by means of a plurality of hinges 27, thus allowing the rotation of part 24' with regard to part 23'. Means not shown in figure 5 horizontally supports part 24' in order to form with the other fixed part 23' a support surface for the pack of panels.

In figures 6A, 6b two configurations of a fourth embodiment of the present invention have been shown, wherein the two parts 23'', 24" which constitute bench 5 are hinged to each other by means of a hinge 28 which allows the rotation of a part with regard to the other one. In this way, by a clockwise rotation of part 24" on hinge 28 the continuity of the support plane between two adjacent benches 5 is provided.

It is evident that in the embodiments shown in figures 4, 5, 6A, 6B it may be chosen both the solution represented in figure 1, wherein edge 5d of bench 5 consists of an arc of a circle, and the solution of figure 3, wherein the edge 5d consists of a straight central portion perpendicular to axis T, and of two circular end portions connecting edge 5b and 5c.

## Claims

1. A machine for cutting packs of panels, and comprising:
a worktable (3);
a cutting station (4) installed along an edge of said worktable (3) and for cutting packs (2) of panels both longitudinally and transversely along a single cutting line (X) and by means of a circular saw (4a); and
a number of benches (5) located on the opposite side of said cutting station (4) to said worktable (3), and each presenting a respective horizontal longitudinal axis (T) perpendicular to said cutting line (X), and a first axial end portion adjacent to said cutting station (4);
each of said benches (5) presents a contour defined by a first edge (5a) adjacent to said cutting station (4) and therefore defining said first portion, by two substantially straight second edges (5b, 5c) opposite each other and parallel to said axis (T), and by a third edge (5d) opposite said first edge (5a) **characterized in that** said third edge (5d) presentes at least one curvilinear portion.

2. A machine as claimed in Claim 1, wherein said third edge (5d) describes an arc of a circle with the center on said axis (T) and a diameter substantially equal to the distance between said second edges (5b, 5c).

3. A machine as claimed in Claim 1, wherein said central portion of said third edge (5d) is straight, and is connected to said second edges (5b, 5c) by said circular lateral portions.

4. A machine as claimed in any one of the foregoing Claims, wherein said worktable (3) is divided into two portions (3a, 3b) with respective longitudinal axes parallel to each other; at least one of said benches (5) being located at a first of said portions (3a, 3b); and at least one of said benches (5) being located at a second of said portions (3b, 3a).

5. A machine as claimed in any one of the foregoing Claims, wherein each of said benches (5) presents an inner channel (15) communicating with said upper face of said bench (5) through a number of holes (16) formed in said upper face; a device (17) being provided for supplying said channel (15) with compressed air via a conduit (18).

6. A machine as claimed in claim 2 or claim 3, wherein said bench (5) is divided in two parts (23, 24; 23', 24'; 23'', 24'') linked to each other by connection means (25, 26; 27; 28).

7. A machine as claimed in claim 6, wherein in the first part (23) of said bench (5) at least one seat (25) is provided, whereas in the second part (24) of said bench (5) at least one pin (26) is provided, said connection of said second part (24) with said first part (23) being realized by means of a connection of at least one pin (26) with at least one seat (25).

8. A machine as claimed in claim 6, wherein the connection of said first part (23'; 23'') and the second part (24'; 24") is realized by means of at least one hinge (27; 28).

9. A machine as claimed in claim 8, wherein said hinge (28) allows a rotation of said second part (24") with regard to said first part (23") on the horizontal lying plane of said first part (23").

10. A bench (5) on a cutting machine according to one of the preceding claims, comprising a perimeter defined by a substantially straight first edge (5a), by two substantially straight second edges (5b, 5c) perpendicular to said first edge (5a), and by a third edge (5d) opposite said first edge (5a); **characterized by** said third edge (5d) comprises at least a curved portion.

## Patentansprüche

1. Maschine zum Schneiden von Plattenstapeln, umfassend:
einen Werktisch (3);
eine Schneidstation (4), die entlang einer Kante des Werktisches (3) installiert ist und mittels einer Kreissäge (4a) Plattenstapel (2) sowohl in Längs- als auch in Querrichtung entlang einer einzigen Schneidlinie (X) schneidet; und
eine Anzahl von Bänken (5), die an der dem Werktisch (3) gegenüberliegenden Seite der Schneidstation (4) angeordnet sind und wovon jede eine jeweilige horizontale Achse (T), die zur Schneidlinie (X) senkrecht ist, und einen an die Schneidstation (4) angrenzenden ersten axialen Endabschnitt aufweist;
wobei jede der Bänke (5) eine Kontur aufweist, die durch eine erste Kante (5a), die an die Schneidstation (4) angrenzt und somit den ersten Abschnitt definiert, durch zwei im wesentlichen gerade zweite Kanten (5b, 5c), die einander gegenüberliegen und zur Achse (T) parallel sind, und durch eine dritte Kante (5d), die der ersten Kante (5a) gegenüberliegt, definiert ist, **dadurch gekennzeichnet, daß** die dritte Kante (5d) wenigstens einen krummlinigen Abschnitt aufweist.

2. Maschine nach Anspruch 1, bei der die dritte Kante (5d) einen Kreisbogen beschreibt, dessen Mittelpunkt auf der Achse (T) liegt, und einen Durchmesser besitzt, der im wesentlichen gleich dem Abstand zwischen den Kanten (5b, 5c) ist.

3. Maschine nach Anspruch 1, bei der der mittlere Abschnitt der dritten Kante (5d) gerade ist und durch kreisförmige Seitenabschnitte mit den zweiten Kanten (5b, 5c) verbunden ist.

4. Maschine nach einem der vorangehenden Ansprüche, bei der der Werktisch (3) in zwei Abschnitte (3a, 3b) mit zueinander parallelen jeweiligen Achsen aufgeteilt ist; wenigstens eine der Bänke (5) auf einem ersten der Abschnitte (3a, 3b) angeordnet ist; und wenigstens eine der Bänke (5) auf einem zweiten der Abschnitte (3a, 3b) angeordnet ist.

5. Maschine nach einem der vorangehenden Ansprüche, bei der jede der Bänke einen Innenkanal (15) aufweist, der mit der Oberfläche der Bank (5) über eine Anzahl von in der Oberfläche angebrachten Bohrungen (16) in Verbindung steht; wobei eine Vorrichtung (17) für die Versorgung des Kanals (15) mit Druckluft über eine Leitung (18) vorgesehen ist.

6. Maschine nach Anspruch 2 oder 3, bei der die Bank (5) in zwei Teile (23, 24; 23', 24'; 23", 24") aufgeteilt ist, die durch Verbindungsmittel (25, 26; 27; 28) miteinander verbunden sind.

7. Maschine nach Anspruch 6, bei der im ersten Teil (23) der Bank (5) wenigstens ein Sitz (25) vorgesehen ist, während im zweiten Teil (24) der Bank (5) wenigstens ein Stift (26) vorgesehen ist, wobei die Verbindung des zweiten Teils (24) mit dem ersten Teil (23) mittels einer Verbindung von wenigstens einem Stift (26) mit wenigstens einem Sitz (25) erfolgt.

8. Maschine nach Anspruch 6, bei der die Verbindung des ersten Teils (23'; 23") und des zweiten Teils (24'; 24") wenigstens mittels eines Gelenks (27; 28) erfolgt.

9. Maschine nach Anspruch 8, bei der das Gelenk (28) eine Drehung des zweiten Teils (24") in bezug auf den ersten Teil (23") in der horizontalen Ebene des ersten Teils (23") ermöglicht.

10. Bank (5) auf einer Schneidmaschine nach einem der vorangehenden Ansprüche, die eine Begrenzungslinie aufweist, die durch eine im wesentlichen gerade erste Kante (5a), durch zwei im wesentlichen gerade zweite Kanten (5b, 5c), die zur ersten Kante (5a) senkrecht sind, und durch eine dritte Kante (5d), die der ersten Kante (5a) gegenüberliegt, definiert ist; **dadurch gekennzeichnet, daß** die dritte Kante (5d) wenigstens einen gekrümmten Abschnitt umfaßt.

## Revendications

1. Machine pour couper des ensembles de panneaux, et comprenant :
un plan de travail (3) ;
un poste de coupe (4) installé le long d'un bord dudit plan de travail (3) et destiné à couper des ensembles (2) de panneaux à la fois longitudinalement et transversalement le long d'une ligne de coupe unique (X) et au moyen d'une scie circulaire (4a) ; et
un certain nombre de bancs (5) situés sur le côté opposé dudit poste de coupe (4) par rapport au dit plan de travail (3), et présentant chacun un axe longitudinal horizontal respectif (T) perpendiculaire à ladite ligne de coupe (X), et une première partie d'extrémité axiale adjacente au dit poste de coupe (4) ;
chacun desdits bancs (5) présentant un contour défini par un premier bord (5a) adjacent au dit poste de coupe (4) et définissant par conséquent ladite première partie, par deux deuxièmes bords sensiblement droits (5b, 5c) opposés l'un à l'autre et parallèles au dit axe (T), et par un troisième bord (5d) opposé au dit premier bord (5a), **caractérisée en ce que** ledit troisième bord (5d) présente au moins une partie curviligne.

2. Machine selon la revendication 1, dans laquelle ledit troisième bord (5d) décrit un arc de cercle avec le centre sur ledit axe (T) et un diamètre sensiblement égal à la distance entre lesdits deuxièmes bords (5b, 5c).

3. Machine selon la revendication 1, dans laquelle ladite partie centrale dudit troisième bord (5d) est droite et est reliée auxdits deuxièmes bords (5b, 5c) par lesdites parties latérales circulaires.

4. Machine selon l'une quelconque des revendications précédentes, dans laquelle ledit plan de travail (3) est divisé en deux parties (3a, 3b) avec des axes longitudinaux respectifs parallèles l'un à l'autre ; au moins l'un desdits bancs (5) étant situé au niveau d'une première desdites parties (3a, 3b) ; et au moins l'un desdits bancs (5) étant situé au niveau d'une deuxième desdites parties (3b, 3a).

5. Machine selon l'une quelconque des revendications précédentes, dans laquelle chacun desdits bancs (5) présente un canal intérieur (15) communiquant avec ladite surface supérieure dudit banc (5) par l'intermédiaire d'un certain nombre de trous (16) formés dans ladite surface supérieure ; un dispositif (17) étant prévu pour appliquer au dit canal (15) de l'air comprimé par l'intermédiaire d'un conduit (18).

6. Machine selon la revendication 2 ou la revendication 3, dans laquelle ledit banc (5) est divisé en deux parties (23, 24 ; 23', 24' ; 23'', 24'') liées l'une à l'autre par des moyens de liaison (25, 26 ; 27 ; 28).

7. Machine selon la revendication 6, dans laquelle, dans la première partie (23) dudit banc (5), au moins un logement (25) est prévu, tandis que dans la deuxième partie (24) dudit banc (5), au moins une broche (26) est prévue, ladite liaison de ladite deuxième partie (24) avec ladite première partie (23) étant réalisée au moyen d'une liaison d'au moins une broche (26) avec au moins un logement (25).

8. Machine selon la revendication 6, dans laquelle la liaison de ladite première partie (23' ; 23'') et de la deuxième partie (24' ; 24'') est réalisée au moyen d'au moins une articulation (27 ; 28).

9. Machine selon la revendication 8, dans laquelle ladite articulation (28) permet une rotation de ladite deuxième partie (24'') par rapport à ladite première partie (23'') dans le plan horizontal de ladite première partie (23'').

10. Banc (5) sur une machine de coupe selon l'une des revendications précédentes, comprenant un périmètre défini par un premier bord sensiblement droit (5a), par deux deuxièmes bords sensiblement droits (5b, 5c) perpendiculaires au dit premier bord (5a), et par un troisième bord (5d) opposé au dit premier bord (5a) ; **caractérisé en ce que** ledit troisième bord (5d) comprend au moins une partie incurvée.
